# EUROPEAN PATENT APPLICATION

(11) **EP 0 912 046 A2**
(43) Date of publication of application: **28.04.1999**
(21) Application number: 98308117.5
(22) Date of filing: 06.10.1998
(51) Int. Cl.: H04N 5/232

(54) **Video camera having a device for securing a mirror**

(30) Priority: 20.10.1997 KR 9753781; 24.07.1998 KR 9829837
(71) Applicant: Samsung Electronics Co., Ltd., Suwon-City, Kyungi-do (KR)
(72) Inventor: Lee, Jeong-kwan, Dongan-gu, Anyang-city, Kyungki-do (KR); Moon, Jae-ho 334-802, Byucksan Apartment, Suwon-city, Kyungki-do (KR); Lee, Sung-hee, Jangan-gu, Suwon-city, Kyungki-do (KR)
(74) Representative: Chugg, David John

(57) **Abstract**

A video camera is provided with a device for securing a mirror (22). Trembling of the mirror (22) caused by a hand tremor of the user is counterbalanced by a mirror driving device, and the mirror (22) is secured by the mirror securing device while the mirror driving device does not operate. The mirror securing device comprises a pair of magnets (52, 54) fixed on the mirror (22) and a housing (50), a locking member (58) capable of moving between the magnets (52, 54), and magnetic force generation section for selectively contacting the locking member (58) with the magnets (52). Since the mirror (22) is secured while the mirror driving device does not operate, noise and other complications of the video camera caused by the trembling of the mirror (22) are prevented. Further, even though the hand tremor compensator does not operate, the preciseness of an image caused by the tremble of the mirror does not decline.

## Description

The present invention relates to a video camera having a device for securing a mirror. In particular, this invention is directed to a video camera having a mirror securing device which prevents the free movement of a mirror while the video camera is being carried, by locking the mirror when a hand tremor compensator is not operating.

Generally, a video camera, such as a camcorder, shoots, records and reproduces a desired image.

Since the video camera is generally carried by a user, hand tremors of the user inevitably occur during shooting. When hand tremor occurs, a mirror installed in the video camera trembles, and thereby the image of an object projected in an image pickup device trembles, too. Therefore, it is hard for the user to achieve a precise image. The degree of hand tremor depends on the skill or the individual characteristics of the user; however, due to hand tremor, image focus is scattered and a clear image cannot be achieved especially when the image is projected on a high magnification screen.

To overcome such a shortcoming, a hand tremor compensator has been proposed. Such a hand tremor compensator is a device for counterbalancing the tremble caused by the hand tremor by moving the mirror which is capable of moving freely.

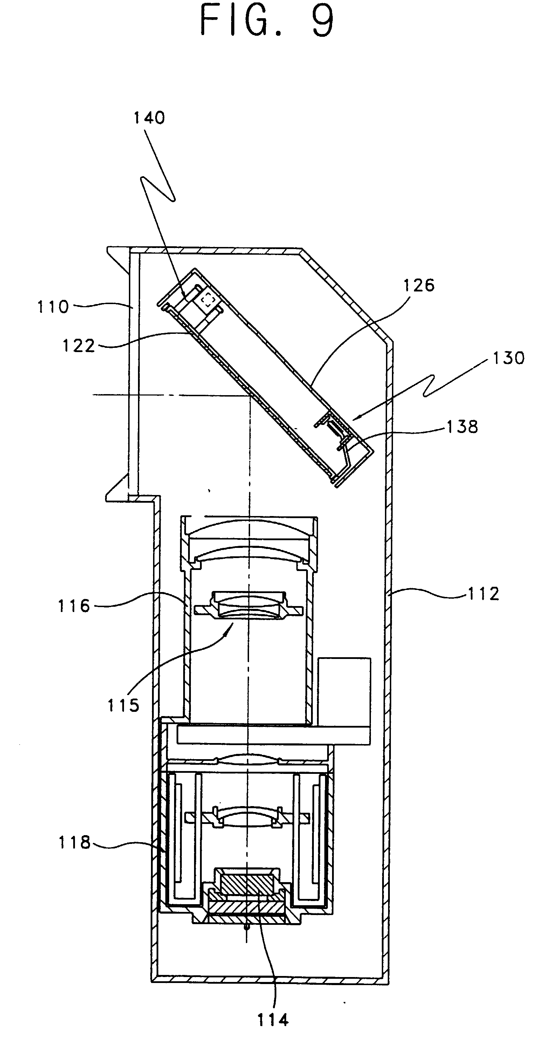

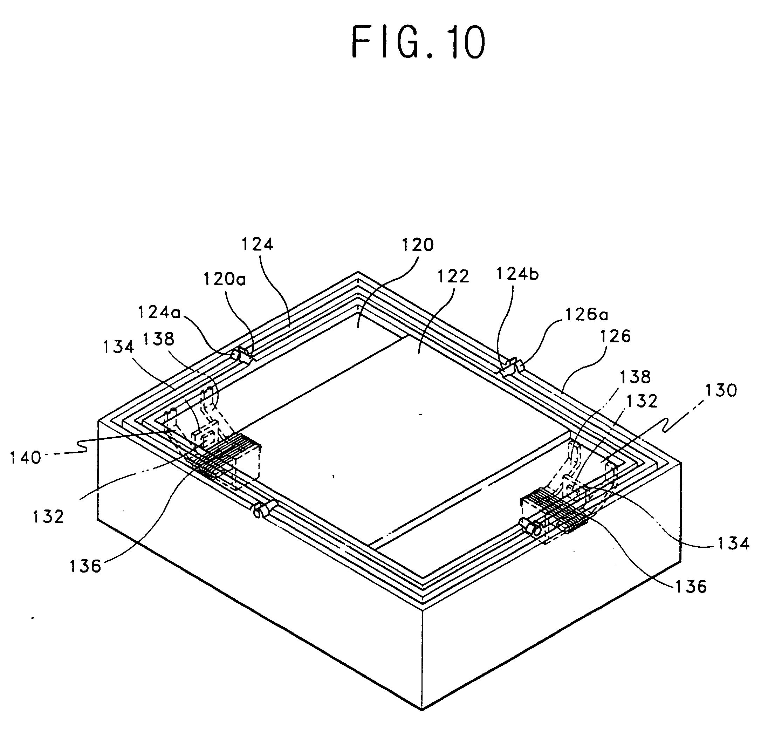

Figure 9 is a schematic side sectional view of a camcorder having a conventional hand tremor compensator, and Figure 10 is a perspective view of a hand tremor compensator shown in Figure 9.

In an outer casing 112 of the camcorder having a window 110 at the front side thereof, a set of lenses 115 for focusing an incident beam of an object is provided. The lens set 115 is installed in a body tube 116 so as to project the beam onto an image pickup device 114. At the rear side of the lens set 115, a diaphragm (not shown) and a barrel master 118 are coupled. A mirror 122 for reflecting the incident beam is installed between the object and the lens set 115.

The mirror 122 is supported by a mirror holder 120, and a middle supporter 124 is installed at the outer side of the mirror holder 120. The middle supporter 124 is accommodated in a mirror casing 126. Hinge sections 124a and 126a are formed respectively at the upper surface of the middle supporter 124 and the mirror casing 126. A vertical shaft 124b is rotatably coupled with the hinge section 126a of the mirror casing 126 in order to rotate the middle supporter 124 in a rolling direction, and a horizontal shaft 120a is rotatably coupled with the hinge section 124a of the middle supporter 124 in order to rotate the mirror holder 120 in a pitch direction.

A mirror driving device for counterbalancing the tremble of the mirror 122 caused by a hand tremor is installed under the mirror holder 120. The mirror driving device is comprised of a rolling actuator 130 and a pitch actuator 140. The rolling actuator 130 is a voice coil motor comprised of a yoke 134 having a magnet 132 attached on the inner side thereof, and a moving member 138 disposed in the yoke 134 and wound with a coil 136. The pitch actuator 140 has substantially the same construction as the rolling actuator 130. The rolling actuator 130 and the pitch actuator 140 are disposed orthogonally to each other.

The angle and the direction in which the mirror trembles caused by a hand tremor are sensed by rolling and pitch sensors (not shown). The rolling and pitch sensors transmit a signal to a control section (not shown). Then, the control section calculates the angle and direction that the mirror trembles, and drives the rolling and the pitch actuators 130 and 140 to change the angle of the mirror 122 in the rolling and pitch directions, whereby the hand tremor is counterbalanced.

However, in the conventional video camera having such a hand tremor compensator, the mirror 122 still trembles while the video camera is being carried and not operated, since the rolling and pitch actuators 130 and 140 do not operate when the camera is not operating, and thereby the mirror 122 is released so as to move freely. Therefore, noise caused by the tremble of the mirror 122 may occur, and the preciseness of the image may drop if the shooting operation is performed without first driving the hand tremor compensator. Furthermore, the video camera may falter due to the trembling of the mirror 122.

With a view to overcome or reduce the above described problem of the prior art, it is an aim of embodiments of the present invention to provide a video camera which locks the mirror while the hand tremor compensator does not operate, whereby noise due to trembling of the mirror does not occur and the preciseness of the image does not decline even if shooting is performed without the operation of the hand tremor compensator.

According to a first aspect, the present invention provides a video camera comprising a lens for focusing the light from an object, and a mirror for reflecting light which is installed between the lens and the object so as to be capable of moving freely within a predetermined range. An image pickup device records the light reflected by the mirror as an image information. The video camera also includes a means for sensing a tremble caused by a hand tremor during a shooting of the object, a means for driving the mirror according to a sensing result of the sensing means so that the tremble is counterbalanced, and a means for securing the mirror while the mirror driving means does not operate.

The mirror driving means preferably comprise rolling and pitch actuators for driving the mirror in a rolling and a pitch direction, respectively. Such rolling and pitch actuators may be voice coil motors respectively comprising: a yoke attached with a magnet on a side thereof; a moving member moving in the yoke; and a coil wound on the moving member, so that the coil interacts with the magnet.

According to a preferred embodiment of the present invention, the mirror securing means comprises a housing fixed at a predetermined position and a pair of magnets fixed on the mirror and the housing respectively. A locking member is preferably installed between the pair of magnets in the housing, so that the locking member is capable of moving between the pair of magnets. A magnetic force generation section is preferably installed on the locking member, and the magnetic force generation section generates a magnetic force for selectively contacting the locking member with the pair of magnets.

The position of the locking member is preferably sensed by a sensor, whereby it is easy to perceive whether the mirror is secured or not. The sensor preferably senses the position of the locking member.

The magnetic force generation section preferably comprises a bobbin attached to the locking member, and a coil wound on the bobbin.

Preferably, springs are disposed between the locking member and the pair of magnets. Then, the impact between the locking member and the magnet, as well as the noise caused by the impact, are prevented.

According to another preferred embodiment of the present invention, the mirror securing means comprises a light emitting element and a light receiving element which are moved relatively to each other by the tremble of the mirror, and a mirror fixing section for fixing the mirror according to a signal from the light emitting and receiving elements.

Here, the mirror driving means is preferably used as the mirror fixing section. The mirror driving means is preferably used for fixing the mirror, without an additional device for securing the mirror. In preferred embodiments of the present invention a simpler construction can be achieved than in the conventional devices.

For a better understanding of the invention, and to show how embodiments of the same may be carried into effect, reference will now be made, by way of example, to the accompanying diagrammatic drawings, in which:
Figure 1 is a schematic side sectional view of a camcorder having a mirror securing device according to an embodiment of the present invention;
Figure 2 is a perspective view of a hand tremor compensator in which the mirror securing device of Figure 1 is installed;
Figure 3 is a sectional view of the hand tremor compensator of Figure 2 taken along the line A-A;
Figure 4 is an enlarged perspective view of the mirror securing device shown in Figure 2;
Figure 5A is a side sectional view of the hand tremor compensator in a state in which the mirror is locked by the mirror securing device;
Figure 5B is a side sectional view of the hand tremor compensator in a state in which the mirror is released by the mirror securing device;
Figure 6 is a perspective view of the hand tremor compensator in which the mirror securing device according to another embodiment of the present invention is installed;
Figures 7 and 8 are sectional views of the hand tremor compensator of Figure 6 taken along the line B-B which respectively show the locking and released states of the mirror;
Figure 9 is a schematic side sectional view of a camcorder having a conventional hand tremor compensator; and
Figure 10 is a perspective view of a hand tremor compensator shown in Figure 9.

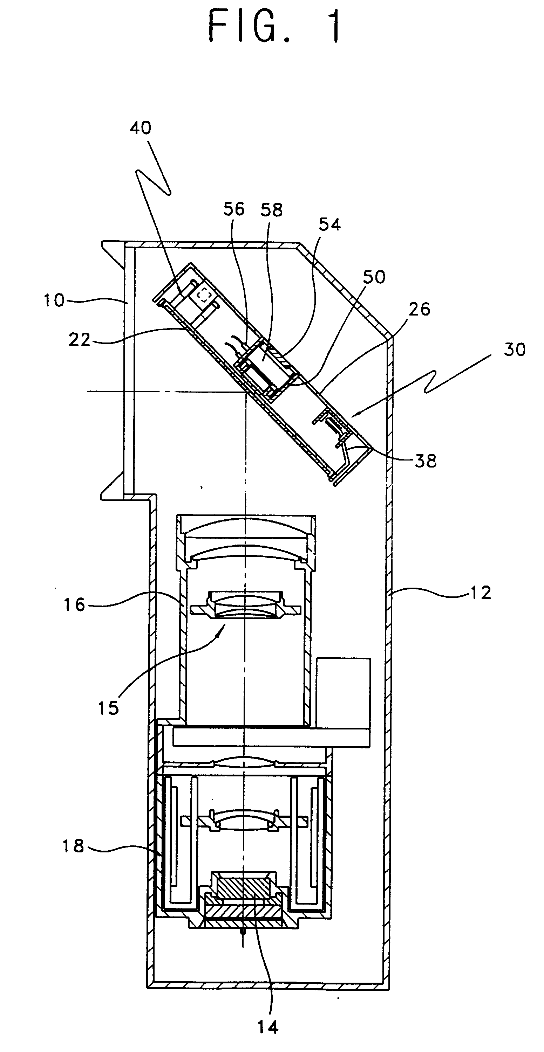

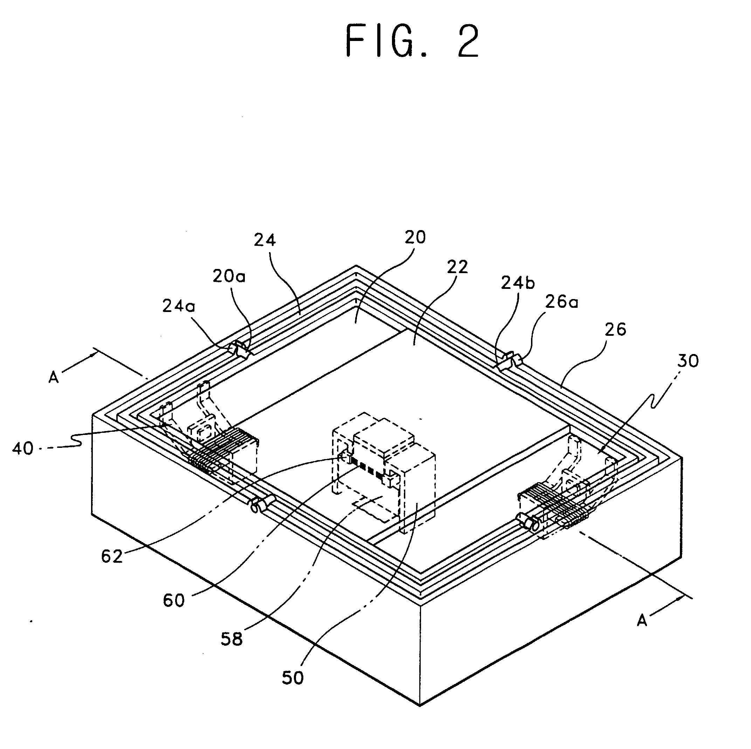

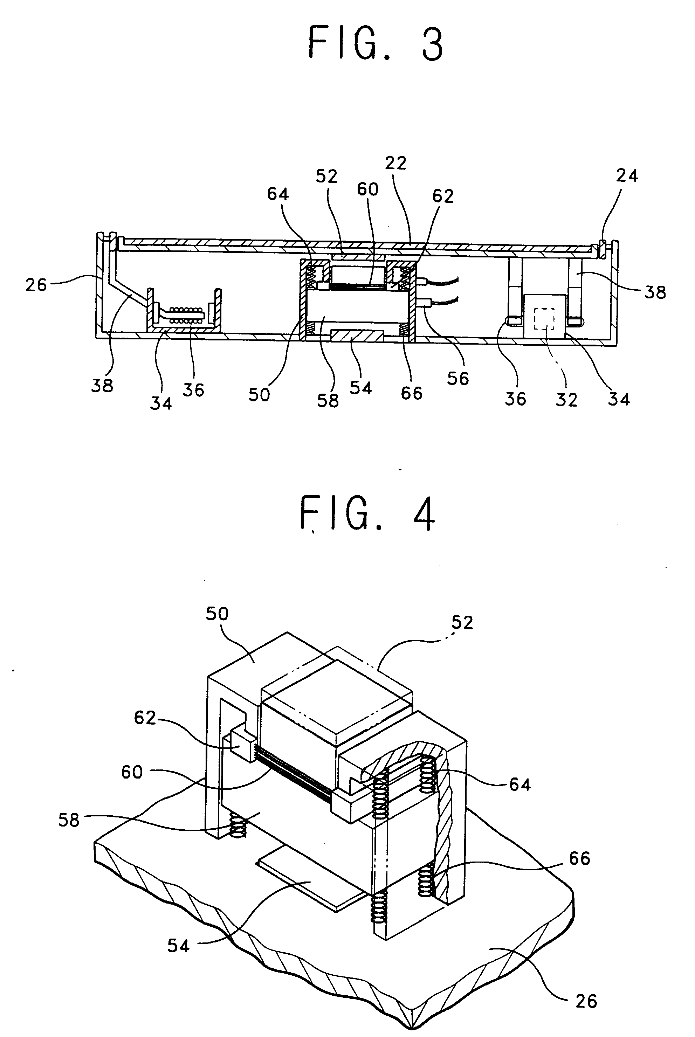

Figure 1 is a schematic side sectional view of a camcorder having a mirror securing device according to an embodiment of the present invention, and Figures 2 and 3 show the mirror securing device according to an embodiment of the present invention.

In an outer casing 12 of the camcorder having a window 10 at the front side thereof, a set of lenses 15 for focusing an incident beam of an object is provided. The lens set 15 is installed in a body tube 16 so as to project the beam onto an image pickup device 14. At the rear side of the lens set 15, a diaphragm (not shown) for controlling the amount of the incident beam of the object and a barrel master 18 are coupled.

The lens set 15 is comprised of a plurality of lenses such as a zoom lens and a focusing lens, and the image pickup device 14 processes the image formed by the lens set 15 so as to be capable of being recorded as optical image information.

A mirror 22 is installed between the object and the lens set 15 for reflecting the incident beam. The mirror 22 is tilted in order to reflect the beam at a right angle.

The mirror 22 is supported by a mirror holder 20, and a middle supporter 24 is installed at the outer side of the mirror holder 20. The middle supporter 24 is accommodated in a mirror casing 26. Hinge sections 24a and 26a are formed respectively at the upper surface of the middle supporter 24 and the mirror casing 26. A vertical shaft 24b is rotatably coupled with the hinge section 26a of the mirror casing 26 in order to rotate the middle supporter 24 in a rolling direction, and a horizontal shaft 20a is rotatably coupled with the hinge section 24a of the middle supporter 24 in order to rotate the mirror holder 20 in a pitch direction.

A mirror driving device for counterbalancing the tremble of the mirror 22 caused by a hand tremor is installed under the mirror holder 20. Furthermore, a mirror securing device for preventing the free movement of the mirror 22 is provided at the central bottom side of the mirror casing 26.

The mirror driving device is comprised of a rolling actuator 30 and a pitch actuator 40. The rolling actuator 30 is a voice coil motor comprised of a yoke 34 having a magnet 32 attached on the inner side thereof, and a moving member 38 disposed in the yoke 34 and wound with a coil 36. The pitch actuator 40 has substantially the same construction as the rolling actuator 30. The rolling actuator 30 and the pitch actuator 40 are disposed orthogonally to each other.

The mirror securing device includes, as shown in Figure 4, a housing 50 fixed on the central bottom surface of the mirror casing 26, upper and lower magnets 52 and 54 respectively attached on the lower surface of the mirror holder 20 and on the bottom of the housing 50, a locking member 58 capable of moving vertically in the housing 50, and a magnetic force generation section for generating a magnetic force in the locking member 58.

The locking member 58 is preferably made of iron, and the magnetic force generation section is comprised of a bobbin 62 installed on the locking member 58 and a coil 60 wound on the bobbin 62. The locking member 58 and the magnetic force generation section constitute an electromagnet. Therefore, when a current is supplied to the coil 60, the locking member 58 counteracts with the upper and lower magnets 52 and 54 by the magnetic force therebetween. In this situation, the upper and lower magnets 52 and 54 are arranged so that the lower and upper parts thereof, respectively facing the locking member 58, have the same poles with each other. Therefore, the locking member 58 comes in selective contact with the upper and lower magnets 52 and 54 according to the direction of the supplied current.

Upper springs 64 are disposed between the locking member 58 and the upper magnet 52, and lower springs 66 are disposed between the locking member 58 and the lower magnet 54. The upper and lower springs 64 and 66 buffer the impact when the locking member 58 strikes on the upper magnet 52 or the lower magnet 54 and minimize the noise caused by the impact.

At a side of the housing 50, sensors 56 for detecting the position of the locking member 58 are installed.

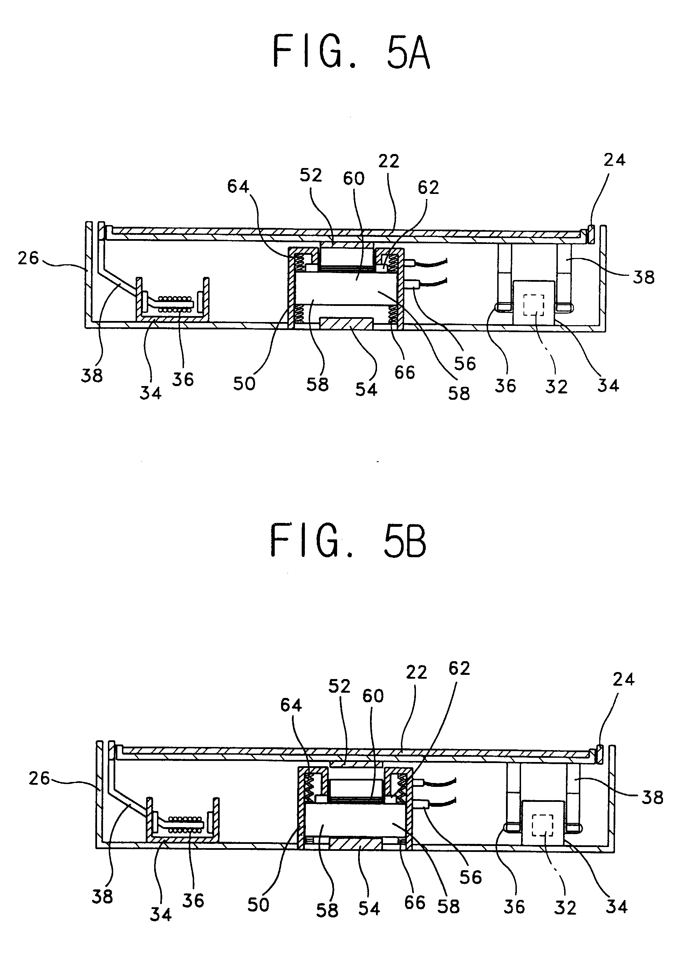

Hereinafter, the operation of the mirror securing device according to the first embodiment of the present invention having the above-described construction will be described in detail with reference to Figures 5A and 5B.

While the mirror driving device for counterbalancing the hand tremor does not operate, the mirror securing device for preventing free movement of the mirror 22 operates. Specifically, when a main power of the video camera is turned on, the coil 60 begins to be supplied with current, and by means of the magnetic force generated in such a situation, the pole of the lower part of the locking member 58 becomes the same with that of the lower magnet 54 and the pole of the upper part of the locking member 58 becomes different from that of the upper magnet 52. Accordingly, the locking member 58 is moved up and comes in contact with the upper magnet 52 as shown in Figure 5A.

Then, the sensors 56 sense the position of the locking member 58, and the current supplied to the coil 60 is cut off when the locking member 58 is sensed to be moved up into proper position. Therefore, the upper magnet 52 and the locking member 58 are maintained in a contacting state with each other, and then the mirror 22 fixed on the mirror holder 20 is secured by the contacting force. The impact occurring when the locking member 58 strikes on the upper magnet 52 or the lower magnet 54 is buffered by the upper and lower springs 64 and 66, and thereby the impact to the upper and lower magnets 52 and 54 and the noise caused thereby is minimized.

Meanwhile, while the video camera shoots the object, the operation of the mirror securing device is stopped and the mirror driving device for counterbalancing the hand tremor operates. When the video camera is converted to a mode for compensating the hand tremor, the coil 60 wound on the locking member 58 is supplied with a reverse current. By means of the magnetic force generated in such a situation, the pole of the upper part of the locking member 58 becomes the same with that of the upper magnet 52 and the pole of the lower part of the locking member 58 becomes different from that of the lower magnet 54. Accordingly, the locking member 58 is moved down and comes in contact with the lower magnet 54 as shown in Figure 5B.

Then, the sensors 56 sense the position of the locking member 58, and the current supplied to the coil 60 is cut off when the locking member 58 is sensed to be moved down completely. Therefore, the lower magnet 54 and the locking member 58 are maintained in a contacting state with each other and then the mirror holder 20 is released.

After that, a gyrosensor senses the degree of the tremble of the video camera, and outputs a signal regarding the sensing results to a control section (not shown). The control section drives the rolling and pitch actuators 30 and 40 according to the signal inputted thereto. That is, the control section regulates the intensity of the magnetic force between the moving member 38 and the magnet 32 by regulating the current supplied to the coil 36 installed in the rolling and pitch actuators 30 and 40. The moving member 38 moves up and down relatively to the yoke 34 according to the intensity of the regulated magnetic force, and consequently, the middle supporter 24 and the mirror holder 20 rotate about the vertical shaft 24b and the horizontal shaft 20a. Therefore, the mirror 22 moves in the rolling and the pitch directions to counterbalance the tremble of the mirror 22 caused by the hand tremor, and a precise image of the object can be achieved.

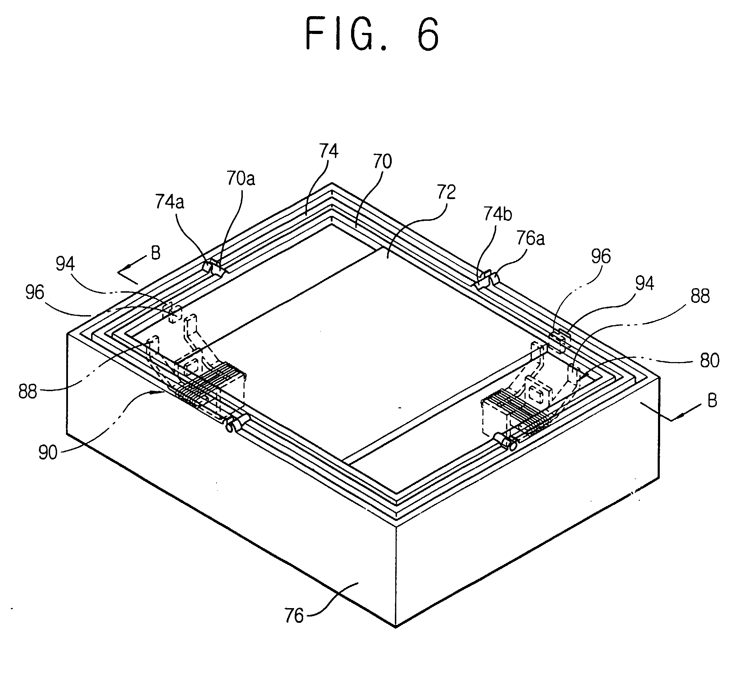

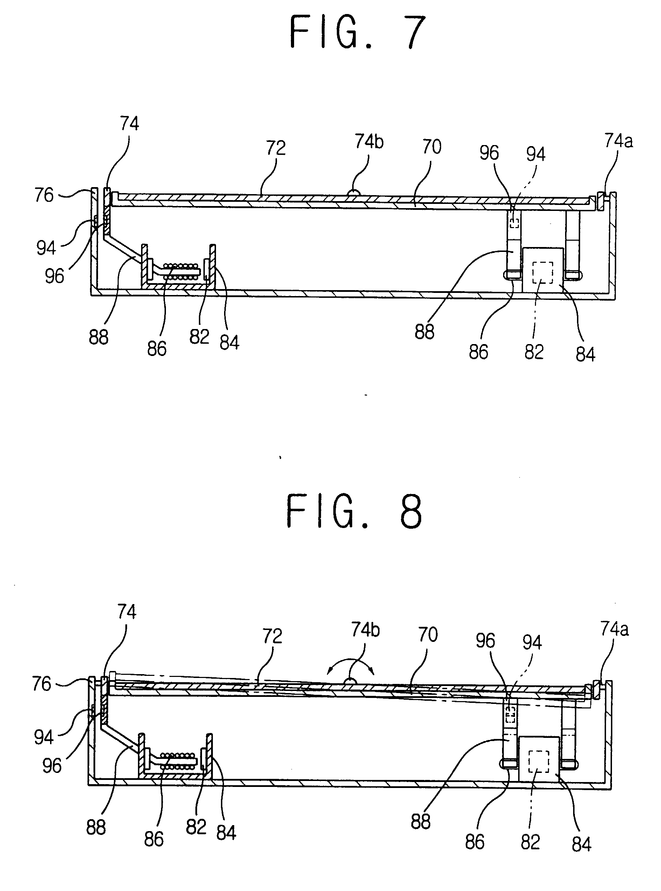

Figures 6 through 8 show the mirror securing device according to another embodiment of the present invention.

In this embodiment, except for the mirror securing device, the elements are the same as those of the aforementioned first embodiment. Thus, the constructions of the mirror holder 70 for supporting the mirror 72, the middle supporter 74, the mirror casing 76, the hinge sections 74a and 76a of the middle supporter 74 and the mirror casing 76, the vertical and horizontal shafts 74b and 70a assembled with the hinge sections 74a and 76a, and the mirror driving device comprised of the rolling and pitch actuators 80 and 90 are the same with those of the first embodiment.

In this embodiment, the mirror securing device includes light receiving elements 94, light emitting elements 96 for controlling the rolling and pitch actuators 80 and 90 in an electrical manner, and a mirror fixing section for fixing the mirror 74 on the basis of the signal from the elements 94 and 96. The light receiving element 94 of the rolling actuator 80 is installed at the inner side of the mirror casing 76, and the light-emitting element 96 of the rolling actuator 80 is installed at the outer surface of the middle supporter 74. Furthermore, the light receiving element 94 of the pitch actuator 90 is installed at the inner side of the middle supporter 74, and the light emitting element 94 of the pitch actuator 90 is installed at the outer side of the mirror holder 70. The mirror driving device, comprised of the rolling and pitch actuators 80 and 90 is used as the mirror fixing section.

Hereinafter, the operation of the mirror securing device according to the second embodiment of the present invention will be described.

While the mirror driving device for counterbalancing the hand tremor does not operate, the mirror securing device for preventing the free movement of the mirror 72 operates. When the main power of the video camera is turned on, the currents are respectively supplied to the rolling and pitch actuators 80 and 90, and more specifically, to the coils 86 wound on the moving members 88. Then, the moving members 88 move up and down.

When the central positions of the light receiving elements 94 and the light emitting elements 96 correspond with each other while the moving members 88 move, the light receiving elements 94 receive the light emitted by the light emitting elements 96 and respectively send electrical signals to the control section which is not shown. Receiving the electrical signals, the control section controls the rolling and pitch actuators 80 and 90 so that the respective light emitting elements 96 are maintained to the positions identical to the corresponding light receiving elements 94 respectively. That is, the positions of the respective moving members 88 in the rolling and pitch actuators 80 and 90 are fixed relatively to the magnets 82 by the current applied to the coils 86 from the control section, and thereby the mirror 72 is secured.

Meanwhile, while the video camera shoots the object, the operation of the mirror securing device is stopped and the mirror driving device for counterbalancing the hand tremor operates. When the video camera is converted to a mode for compensating the hand tremor, the supply of the current to the rolling and pitch actuators 80 and 90 is stopped, and the middle supporter 74 and the mirror holder 70 move freely.

In this situation, the operation of the mirror driving device is the same as that of the first embodiment. In other words, the rolling and pitch actuators 80 and 90 are driven on the basis of the degree of the tremble of the video camera sensed by the gyrosensor, and consequently the tremble of the mirror 22 caused by the hand tremor is counterbalanced.

According to the second embodiment described above, since the mirror 72 is secured by the mirror driving device used for compensating the hand tremor, the mirror securing device can be simply constructed.

As described above, according to embodiments of the present invention, the tremble of the mirror 72 is prevented while the mirror driving device for compensating the hand tremor does not operate. Therefore, noise and other problems of the video camera associated with the trembling of the mirror 72 are reduced. Furthermore, even if shooting is performed without performing the function for compensating the hand tremor, the decline in precision of the image caused by mirror tremble does not occur.

While the present invention has been particularly shown and described with reference to the preferred embodiment thereof, it will be understood by those skilled in the art that various changes in form and details may be effected therein without departing from the scope of the invention as defined by the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video camera comprising:
a lens (15) for focusing light from an object;
a mirror (22) for reflecting the light, installed between said lens (15) and said object so as to be capable of moving freely within a predetermined range;
an image pickup device (14) for recording the light reflected by said mirror as an image information;
a means for sensing a tremble caused by a hand tremor during a shooting of said object;
a means for driving said mirror (22) according to a sensing result of said sensing means so that the tremble is counterbalanced; and
a means for securing said mirror while said mirror driving means does not operate.

2. The video camera as claimed in claim 1, wherein said mirror driving means is comprised of a rolling actuator (30) and a pitch actuator (40) for driving said mirror (22) in a rolling and a pitch direction, respectively.

3. The video camera as claimed in claim 2, wherein said rolling and pitch actuators (30; 40) are voice coil motors respectively comprising:
a yoke (34) attached with a magnet (32) on a side thereof;
a moving member (38) moving in said yoke (34); and
a coil (36) wound on said moving member (38), said coil (36) interacting with said magnet (32).

4. The video camera as claimed in claim 1, wherein said mirror securing means comprises:
a housing (50) fixed at a predetermined position;
a pair of magnets (52, 54) fixed on said mirror (22) and said housing (50), respectively;
a locking member (58) being installed between said pair of magnets (52, 54) in said housing (50), said locking member being capable of moving between said pair of magnets (52, 54); and
a magnetic force generation section being installed on said locking member (58), for generating a magnetic force for selectively contacting said locking member (58) with said pair of magnets (52, 54).

5. The video camera as claimed in claim 4, further comprising a sensor (56) for sensing a position of said locking member (58).

6. The video camera as claimed in claim 4, wherein said magnetic force generation section comprises a bobbin (62) attached to said locking member (58), and a coil (60) wound on said bobbin (62).

7. The video camera as claimed in claim 4, wherein springs (64, 66) are disposed between said locking member and said pair of magnets (52, 54).

8. The video camera as claimed in claim 1, wherein said mirror securing means comprises a light emitting element (96) and a light receiving element (94) which are moved relatively to each other by the tremble of said mirror (22), and a mirror fixing section for fixing said mirror according to a signal from said light emitting (96) and receiving elements (94).

9. The video camera as claimed in claim 8, wherein said mirror fixing section is said mirror driving means.
